# EUROPÄISCHE PATENTANMELDUNG

(11) **EP 4 015 896 A1**
(43) Veröffentlichungstag der Anmeldung: **22.06.2022**
(21) Anmeldenummer: 20215397.9
(22) Anmeldetag: 18.12.2020
(51) Int. Cl.: F21S 41/20, F21V 5/00, G02B 3/00, F21S 43/20, F21S 41/275, F21S 41/25, G02B 27/09, F21S 41/265

(54) **PROJEKTIONSVORRICHTUNG FÜR EINEN KRAFTFAHRZEUGSCHEINWERFER**

(71) Anmelder: ZKW Group GmbH, 3250 Wieselburg (AT)
(72) Erfinder: Schager, Alexander Thomas, 3270 Scheibbs (AT); Mandl, Bernhard, 3200 Ober-Grafendorf (AT); Pritzl, Leopold, 3254 Bergland (AT)
(74) Vertreter: Patentanwaltskanzlei Matschnig & Forsthuber OG

(57) **Zusammenfassung**

Projektionsvorrichtung (10) für einen Kraftfahrzeugscheinwerfer, wobei die Projektionsvorrichtung (10) Folgendes umfasst:
- ein erstes Mikrooptikarray (100), welches eine Mehrzahl in einer Ebene matrixartig angeordnete Einkoppel-Mikrooptiken (110) aufweist, welche Einkoppel-Mikrooptiken (110) einen ersten Brennpunkt (F1) aufweisen,
- ein zweites Mikrooptikarray (200), welches eine Mehrzahl in einer Ebene matrixartig angeordnete Auskoppel-Mikrooptiken (210) aufweist, welche Auskoppel-Mikrooptiken (210) jeweils einen zweiten Brennpunkt (F2) aufweisen,
- zumindest eine Substratschicht (300), an welche das erste und das zweite Mikrooptikarray (110, 200) gegenüberliegen zueinander angeordnet sind, wobei die zumindest eine Substratschicht (300) zumindest abschnittsweise schräg zur Hauptabstrahlrichtung (X) angeordnet ist, sodass die zumindest eine Substratschicht (300) einen Neigungswinkel (W) zur Hauptabstrahlrichtung (X) abweichend von 90 Grad aufweist, wobei jeweils eine Einkoppel-Mikrooptik (110) und jeweils eine korrespondierende Auskoppel-Mikrooptik (210) ein Mikrooptikpaar bilden, wobei das erste und das zweite Mikrooptikarray (100, 200) derart zueinander an der Substratschicht (300) angeordnet ist, dass der erste und der zweite Brennpunkt (F1, F2) jedes Mikrooptikpaares in einem gemeinsamen Brennpunkt zusammenfallen, sodass ein parallel zur Hauptabstrahlrichtung (X) auf eine Einkoppel-Mikrooptik (110) einfallendes Lichtstrahlbündel aus der Auskoppel-Mikrooptik (210) als zur Hauptabstrahlrichtung (X) paralleles Lichtstrahlbündel auskoppelbar ist, wobei das auskoppelbare Lichtstrahlbündel einen Parallelversatz zu dem einfallenden Lichtstrahlbündel aufweist.

## Beschreibung

Die Erfindung betrifft eine Projektionsvorrichtung für einen Kraftfahrzeugscheinwerfer, welche Projektionsvorrichtung eingerichtet ist, Licht einer Lichtquelle vor die Projektionsvorrichtung in Richtung einer Hauptabstrahlrichtung zu projizieren, wobei die Projektionsvorrichtung Folgendes umfasst:
- zumindest ein erstes Mikrooptikarray, welches eine Mehrzahl in einer Ebene matrixartig angeordnete Einkoppel-Mikrooptiken aufweist, welche Einkoppel-Mikrooptiken jeweils einen ersten Brennpunkt aufweisen, wobei das erste Mikrooptikarray eingerichtet ist, Lichtstrahlen einer Lichtquelle in die Projektionseinrichtung einzukoppeln, wobei jede Einkoppel-Mikrooptik des ersten Mikrooptikarrays eingerichtet ist, parallel zur Hauptabstrahlrichtung auf die Einkoppel-Mikrooptiken einfallende Lichtstrahlen in dem jeweiligen ersten Brennpunkt zu bündeln,
- zumindest ein zweites Mikrooptikarray, welches eine Mehrzahl in einer Ebene matrixartig angeordnete Auskoppel-Mikrooptiken aufweist, welche Auskoppel-Mikrooptiken jeweils einen zweiten Brennpunkt aufweisen, wobei das zweite Mikrooptikarray eingerichtet ist, in die Projektionseinrichtung eingekoppelte Lichtstrahlen aus der Projektionseinrichtung in Richtung der Hauptabstrahlrichtung auszukoppeln, wobei jede Auskoppel-Mikrooptik eingerichtet ist, Lichtstrahlen, welche den zweiten Brennpunkt schneiden, parallel zur Hauptabstrahlrichtung aus der Projektionsoptik auszukoppeln,
- zumindest eine Substratschicht, welche sich zumindest abschnittsweise entlang einer Ebene erstreckt, wobei das zumindest eine erste Mikrooptikarray an einer ersten Seite der Substratschicht angeordnet ist, und wobei das zumindest eine zweite Mikrooptikarray an einer zweiten Seite der Substratschicht angeordnet ist, wobei die zweite Seite der Substratschicht der ersten Seite der Substratschicht gegenüberliegend angeordnet ist.

Weiters betrifft die Erfindung einen Kraftfahrzeugscheinwerfer mit zumindest einer erfindungsgemäßen Projektionsvorrichtung.

In der Automobilindustrie entsteht immer mehr der Wunsch, dass Linsen bzw. Mikrooptiklinsen abseits von einer planaren Erstreckung auch geneigten bzw. gebogenen Konturen folgen können, welche nicht zwangsläufig orthogonal zu einer Hauptabstrahlrichtung angeordnet sein müssen, um mehr Möglichkeiten im Design von Kraftfahrzeugscheinwerfern zu haben, beispielsweise bei der Konstruktion von Tagfahrlichter oder Abblendlichter.

Im Stand der Technik gibt es bereits Möglichkeiten Konstruktionen zu entwerfen, die abseits einer zur Hauptabstrahlrichtung orthogonalen Fläche sind, jedoch sind hier lediglich Abweichungen von bis zu ungefähr 5° Grad möglich.

Es ist daher eine Aufgabe der Erfindung eine verbesserte Projektionsvorrichtung bereitzustellen.

Diese Aufgabe wird dadurch gelöst, dass die zumindest eine Substratschicht zumindest abschnittsweise schräg zur Hauptabstrahlrichtung angeordnet ist, sodass die zumindest eine Substratschicht einen Neigungswinkel zur Hauptabstrahlrichtung abweichend von 90 Grad aufweist,
wobei jeweils eine Einkoppel-Mikrooptik des ersten Mikrooptikarrays und jeweils eine korrespondierende Auskoppel-Mikrooptik des zweiten Mikrooptikarrays ein Mikrooptikpaar bilden,
wobei das erste und das zweite Mikrooptikarray derart zueinander an der Substratschicht angeordnet ist, dass der erste und der zweite Brennpunkt jedes Mikrooptikpaares in einem gemeinsamen Brennpunkt zusammenfallen, welcher in der zumindest einen Substratschicht gelegen ist, sodass ein parallel zur Hauptabstrahlrichtung auf eine Einkoppel-Mikrooptik des Mikrooptikpaars einfallendes Lichtstrahlbündel aus der Auskoppel-Mikrooptik des entsprechenden Mikrooptikpaares als zur Hauptabstrahlrichtung paralleles Lichtstrahlbündel auskoppelbar ist, wobei das auskoppelbare Lichtstrahlbündel einen Parallelversatz zu dem einfallenden Lichtstrahlbündel aufweist.

Auf diese Weise lassen sich eingangs erwähnte Abweichungen von einer Fläche orthogonal zur Hauptabstrahlrichtung von bis zu 30° Grad realisieren.

Es kann vorgesehen sein, dass die Projektionsvorrichtung zumindest eine Lichtquelle umfasst, welche eingerichtet ist, parallel zur Hauptabstrahlrichtung ausgerichtete Lichtstrahlen zu emittieren.

Es kann vorgesehen sein, dass die Auskoppel-Mikrooptiken des zweiten Mikrooptikarrays als Teil eines Ellipsoiden ausgebildet sind.

Es kann vorgesehen sein, dass die Einkoppel-Mikrooptiken des ersten Mikrooptikarrays als Freiformlinsen ausgebildet sind.

Es kann vorgesehen sein, dass die Einkoppel-Mikrooptiken des ersten Mikrooptikarrays jeweils als Zylinderlinse ausgebildet sind.

Es kann vorgesehen sein, dass die Auskoppel-Mikrooptiken des zweiten Mikrooptikarrays und/oder die Einkoppel-Mikrooptiken des ersten Mikrooptikarrays nicht rotationssymmetrisch um die Hauptabstrahlrichtung ausgebildet sind.

Es kann vorgesehen sein, dass die Einkoppel-Mikrooptiken des ersten Mikrooptikarrays gesehen in Hauptabstrahlrichtung asymmetrisch zu dem jeweiligen ersten Brennpunkt horizontal beschnitten sind.

Es kann vorgesehen sein, dass die Einkoppel-Mikrooptiken eine erste optische Achse aufweisen und die Auskoppel-Mikrooptiken eine zweite optische Achse aufweisen, wobei das erste Mikrooptikarray und das zweite Mikrooptikarray derart zueinander angeordnet sind, dass für jedes Mikrooptikpaar die erste und die optische Achse auf einer gemeinsamen Achse liegen, welche Achse parallel zur Hauptabstrahlrichtung verläuft.

Die Aufgabe wird ebenso gelöst durch einen Kraftfahrzeugscheinwerfer mit zumindest einer erfindungsgemäßen Projektionsvorrichtung.

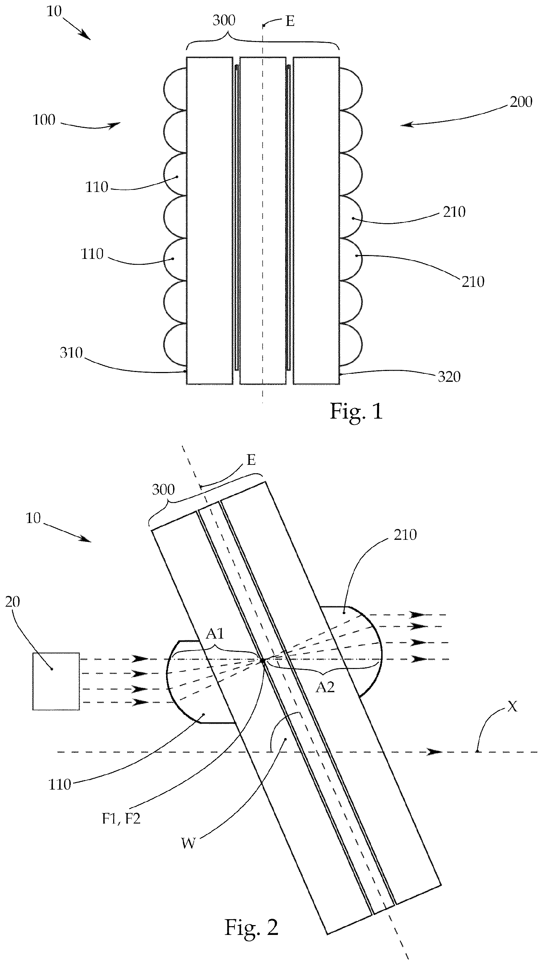

Nachfolgend wird die Erfindung anhand von beispielhaften Zeichnungen näher erläutert. Hierbei zeigt
Fig. 1 eine beispielhafte Projektionsvorrichtung in einer schematischen Darstellung, wobei die Projektionsvorrichtung eine Substratschicht aufweist, an deren gegenüberliegenden Seiten ein erstes Mikrooptikarray und ein zweites Mikrooptikarray angeordnet ist, und
Fig. 2 die beispielhafte Projektionsvorrichtung in einer Detaildarstellung, wobei die Substratschicht schräg zu einer Hauptabstrahlrichtung angeordnet ist, wobei zusätzlich ein beispielhaftes Mikrooptikpaar, umfassend eine Einkoppel-Mikrooptik des ersten Mikrooptikarrays und eine Auskoppel-Mikrooptik des zweiten Mikrooptikarrays, gezeigt ist.

**Fig. 1** zeigt eine beispielhafte Projektionsvorrichtung **10** für einen Kraftfahrzeugscheinwerfer, welche Projektionsvorrichtung **10** eingerichtet ist, Licht einer Lichtquelle vor die Projektionsvorrichtung in Richtung einer Hauptabstrahlrichtung zu projizieren

Die Projektionsvorrichtung **10** umfasst dabei ein erstes Mikrooptikarray **100,** welches eine Mehrzahl in einer Ebene matrixartig angeordnete Einkoppel-Mikrooptiken **110** aufweist, und ein zweites Mikrooptikarray **200,** welches eine Mehrzahl in einer Ebene matrixartig angeordnete Auskoppel-Mikrooptiken **210** aufweist. Ferner umfasst die Projektionsvorrichtung **10** eine Substratschicht **300,** welche sich entlang einer Ebene **E** erstreckt, wobei das erste Mikrooptikarray **100** an einer ersten Seite **310** der Substratschicht **300** angeordnet ist, und wobei das zweite Mikrooptikarray **200** an einer zweiten Seite **320** der Substratschicht **300** angeordnet ist, wobei die zweite Seite **320** der Substratschicht **300** der ersten Seite **310** der Substratschicht **300** gegenüberliegend angeordnet ist.

**Fig. 2** zeigt eine Detailansicht der Projektionsvorrichtung **10,** wobei die Substratschicht **300** schräg zur Hauptabstrahlrichtung **X** angeordnet ist, sodass die zumindest eine Substratschicht **300** einen Neigungswinkel **W** zur Hauptabstrahlrichtung **X** abweichend von 90 Grad aufweist.

Die Projektionsvorrichtung **10** umfasst weiters eine Lichtquelle **20,** welche eingerichtet ist, parallel zur Hauptabstrahlrichtung **X** ausgerichtete Lichtstrahlen zu emittieren.

Ferner weisen die Einkoppel-Mikrooptiken **110** jeweils einen ersten Brennpunkt **F1** auf, wobei das erste Mikrooptikarray **100** eingerichtet ist, Lichtstrahlen der Lichtquelle **20** in die Projektionsvorrichtung **10** einzukoppeln, wobei jede Einkoppel-Mikrooptik **110** des ersten Mikrooptikarrays **100** eingerichtet ist, parallel zur Hauptabstrahlrichtung **X** auf die Einkoppel-Mikrooptiken **110** einfallende Lichtstrahlen in dem jeweiligen ersten Brennpunkt **F1** zu bündeln.

Die Auskoppel-Mikrooptiken **210** weisen ferner jeweils einen zweiten Brennpunkt **F2** auf, wobei das zweite Mikrooptikarray **200** eingerichtet ist, in die Projektionsvorrichtung **10** eingekoppelte Lichtstrahlen aus der Projektionsvorrichtung **10** in Richtung der Hauptabstrahlrichtung **X** auszukoppeln, wobei jede Auskoppel-Mikrooptik **210** eingerichtet ist, Lichtstrahlen, welche den zweiten Brennpunkt **F2** schneiden, parallel zur Hauptabstrahlrichtung **X** aus der Projektionsvorrichtung auszukoppeln.

Wie in **Fig. 2** zu sehen ist, bilden jeweils eine Einkoppel-Mikrooptik **110** des ersten Mikrooptikarrays **100** und jeweils eine korrespondierende Auskoppel-Mikrooptik **210** des zweiten Mikrooptikarrays **200** ein Mikrooptikpaar, wobei das erste und das zweite Mikrooptikarray **100, 200** derart zueinander an der Substratschicht **300** angeordnet ist, dass der erste und der zweite Brennpunkt **F1, F2** jedes Mikrooptikpaares in einem gemeinsamen Brennpunkt zusammenfallen, welcher in der zumindest einen Substratschicht **300** gelegen ist, sodass ein parallel zur Hauptabstrahlrichtung **X** auf eine Einkoppel-Mikrooptik **110** des Mikrooptikpaars einfallendes Lichtstrahlbündel aus der Auskoppel-Mikrooptik **210** des entsprechenden Mikrooptikpaares als zur Hauptabstrahlrichtung **X** paralleles Lichtstrahlbündel auskoppelbar ist, wobei das auskoppelbare Lichtstrahlbündel einen Parallelversatz zu dem einfallenden Lichtstrahlbündel aufweist.

Ferner weisen die Einkoppel-Mikrooptiken **110** eine erste optische Achse **A1** und die Auskoppel-Mikrooptiken **210** eine zweite optische Achse **A2** auf, wobei das erste Mikrooptikarray **100** und das zweite Mikrooptikarray **200** derart zueinander angeordnet sind, dass für jedes Mikrooptikpaar die erste und zweite die optische Achse **A1, A2** auf einer gemeinsamen Achse liegen, welche Achse parallel zur Hauptabstrahlrichtung **X** verläuft, sodass einfallende Lichtstrahlen, welche parallel zur gemeinsamen optischen Achse und auf die gemeinsame optische Achse auf die entsprechende Einkoppel-Mikrooptik **110** einfallen, gerade und ohne Ablenkung aus der entsprechenden Auskoppel-Mikrooptik **210** des Mikrooptikpaares ausgekoppelt werden.

Dabei sind die Auskoppel-Mikrooptiken **210** des zweiten Mikrooptikarrays **200** als Teil eines Ellipsoiden ausgebildet und die Einkoppel-Mikrooptiken **110** des ersten Mikrooptikarrays **100** als Freiformlinsen bzw. als Zylinderlinsen ausgebildet, wobei die Einkoppel-Mikrooptiken **110** des ersten Mikrooptikarrays **100** gesehen in Hauptabstrahlrichtung **X** asymmetrisch zu dem jeweiligen ersten Brennpunkt **F1** horizontal beschnitten sind.

Die Einkoppel-Mikrooptiken **110** sind dabei derart asymmetrisch beschnitten, dass ausgehend von einer symmetrischen Sammeloptik jeweils ein unterer Teil bzw. ein Teil unterhalb der optischen Achse mehrheitlich vorhanden ist.

Generell wird die Zuordnung der Begriffe hinsichtlich einer Orientierung, wie beispielsweise "horizontal", "vertikal", "in horizontaler Richtung", "in vertikaler Richtung", "oben", "unten", "vorne", "hinten", "darunter", "darüber" etc. lediglich zur Vereinfachung gewählt und diese Begriffe beziehen sich möglicherweise auf die Darstellung in den Zeichnungen, nicht jedoch notwendigerweise auf eine aktuelle Gebrauchslage der Projektionsvorrichtung.

Ferner sind die Auskoppel-Mikrooptiken **210** des zweiten Mikrooptikarrays **200** nicht rotationssymmetrisch um die Hauptabstrahlrichtung **X** ausgebildet, wobei die Auskoppelfläche der Auskoppel-Mikrooptik **210** rotationssymmetrisch um die zweite optische Achse **A2** ist.

**LISTE DER BEZUGSZEICHEN**

| | |
|---|---|
| Projektionsvorrichtung... | 10 |
| Lichtquelle... | 20 |
| Erste Mikrooptikarray... | 100 |
| Einkoppel-Mikrooptik... | 110 |
| Zweites Mikrooptikarray... | 200 |
| Auskoppel-Mikrooptik... | 210 |
| Substratschicht... | 300 |
| Erste Seite... | 310 |
| Zweite Seite... | 320 |
| Erste optische Achse... | A1 |
| Zweite optische Achse... | A2 |
| Ebene... | E |
| Erster Brennpunkt... | F1 |
| Zweiter Brennpunkt... | F2 |
| Hauptabstrahlrichtung... | X |
| Neigungswinkel... | W |

## Patentansprüche

1. Projektionsvorrichtung (10) für einen Kraftfahrzeugscheinwerfer, welche Projektionsvorrichtung (10) eingerichtet ist, Licht einer Lichtquelle (20) vor die Projektionsvorrichtung (10) in Richtung einer Hauptabstrahlrichtung (X) zu projizieren, wobei die Projektionsvorrichtung (10) Folgendes umfasst:
- zumindest ein erstes Mikrooptikarray (100), welches eine Mehrzahl in einer Ebene matrixartig angeordnete Einkoppel-Mikrooptiken (110) aufweist, welche Einkoppel-Mikrooptiken (110) jeweils einen ersten Brennpunkt (F1) aufweisen, wobei das erste Mikrooptikarray (100) eingerichtet ist, Lichtstrahlen einer Lichtquelle (20) in die Projektionsvorrichtung (10) einzukoppeln, wobei jede Einkoppel-Mikrooptik (110) des ersten Mikrooptikarrays (100) eingerichtet ist, parallel zur Hauptabstrahlrichtung (X) auf die Einkoppel-Mikrooptiken (110) einfallende Lichtstrahlen in dem jeweiligen ersten Brennpunkt (F1) zu bündeln,
- zumindest ein zweites Mikrooptikarray (200), welches eine Mehrzahl in einer Ebene matrixartig angeordnete Auskoppel-Mikrooptiken (210) aufweist, welche Auskoppel-Mikrooptiken (210) jeweils einen zweiten Brennpunkt (F2) aufweisen, wobei das zweite Mikrooptikarray (200) eingerichtet ist, in die Projektionsvorrichtung (10) eingekoppelte Lichtstrahlen aus der Projektionsvorrichtung (10) in Richtung der Hauptabstrahlrichtung (X) auszukoppeln, wobei jede Auskoppel-Mikrooptik (210) eingerichtet ist, Lichtstrahlen, welche den zweiten Brennpunkt (F2) schneiden, parallel zur Hauptabstrahlrichtung (X) aus der Projektionsvorrichtung auszukoppeln,
- zumindest eine Substratschicht (300), welche sich zumindest abschnittsweise entlang einer Ebene (E) erstreckt, wobei das zumindest eine erste Mikrooptikarray (100) an einer ersten Seite (310) der Substratschicht (300) angeordnet ist, und wobei das zumindest eine zweite Mikrooptikarray (200) an einer zweiten Seite (320) der Substratschicht (300) angeordnet ist, wobei die zweite Seite (320) der Substratschicht (300) der ersten Seite (310) der Substratschicht (300) gegenüberliegend angeordnet ist,
**dadurch gekennzeichnet, dass**
die zumindest eine Substratschicht (300) zumindest abschnittsweise schräg zur Hauptabstrahlrichtung (X) angeordnet ist, sodass die zumindest eine Substratschicht (300) einen Neigungswinkel (W) zur Hauptabstrahlrichtung (X) abweichend von 90 Grad aufweist,
wobei jeweils eine Einkoppel-Mikrooptik (110) des ersten Mikrooptikarrays (100) und jeweils eine korrespondierende Auskoppel-Mikrooptik (210) des zweiten Mikrooptikarrays (200) ein Mikrooptikpaar bilden,
wobei das erste und das zweite Mikrooptikarray (100, 200) derart zueinander an der Substratschicht (300) angeordnet ist, dass der erste und der zweite Brennpunkt (F1, F2) jedes Mikrooptikpaares in einem gemeinsamen Brennpunkt zusammenfallen, welcher in der zumindest einen Substratschicht (300) gelegen ist, sodass ein parallel zur Hauptabstrahlrichtung (X) auf eine Einkoppel-Mikrooptik (110) des Mikrooptikpaars einfallendes Lichtstrahlbündel aus der Auskoppel-Mikrooptik (210) des entsprechenden Mikrooptikpaares als zur Hauptabstrahlrichtung (X) paralleles Lichtstrahlbündel auskoppelbar ist, wobei das auskoppelbare Lichtstrahlbündel einen Parallelversatz zu dem einfallenden Lichtstrahlbündel aufweist.

2. Projektionsvorrichtung nach Anspruch 1, **dadurch gekennzeichnet, dass** die Projektionsvorrichtung (10) zumindest eine Lichtquelle (20) umfasst, welche eingerichtet ist, parallel zur Hauptabstrahlrichtung (X) ausgerichtete Lichtstrahlen zu emittieren.

3. Projektionsvorrichtung nach Anspruch 1 oder 2, **dadurch gekennzeichnet, dass** die Auskoppel-Mikrooptiken (210) des zweiten Mikrooptikarrays (200) als Teil eines Ellipsoiden ausgebildet sind.

4. Projektionsvorrichtung nach einem der Ansprüche 1 bis 3, **dadurch gekennzeichnet, dass** die Einkoppel-Mikrooptiken (110) des ersten Mikrooptikarrays (100) als Freiformlinsen ausgebildet sind.

5. Projektionsvorrichtung nach einem der Ansprüche 1 bis 4, **dadurch gekennzeichnet, dass** die Einkoppel-Mikrooptiken (110) des ersten Mikrooptikarrays jeweils als Zylinderlinse ausgebildet sind.

6. Projektionsvorrichtung nach einem der Ansprüche 1 bis 5, **dadurch gekennzeichnet, dass** die Auskoppel-Mikrooptiken (210) des zweiten Mikrooptikarrays (200) und/oder die Einkoppel-Mikrooptiken (110) des ersten Mikrooptikarrays (100) nicht rotationssymmetrisch um die Hauptabstrahlrichtung (X) ausgebildet sind.

7. Projektionsvorrichtung nach einem der Ansprüche 1 bis 6, **dadurch gekennzeichnet, dass** die Einkoppel-Mikrooptiken (110) des ersten Mikrooptikarrays (100) gesehen in Hauptabstrahlrichtung (X) asymmetrisch zu dem jeweiligen ersten Brennpunkt (F1) horizontal beschnitten sind.

8. Projektionsvorrichtung nach einem der Ansprüche 1 bis 7, **dadurch gekennzeichnet, dass** die Einkoppel-Mikrooptiken (110) eine erste optische Achse (A1) aufweisen und die Auskoppel-Mikrooptiken (210) eine zweite optische Achse (A2) aufweisen, wobei das erste Mikrooptikarray (100) und das zweite Mikrooptikarray (200) derart zueinander angeordnet sind, dass für jedes Mikrooptikpaar die erste und die optische Achse (A1, A2) auf einer gemeinsamen Achse liegen, welche Achse parallel zur Hauptabstrahlrichtung (X) verläuft.

9. Kraftfahrzeugscheinwerfer mit zumindest einer Projektionsvorrichtung (10) einem der Ansprüche 1 bis 8.
